Europäisches Patentamt

European Patent Office

Office européen des brevets

(11) Veröffentlichungsnummer: **0 315 038 B1**

## (12) EUROPÄISCHE PATENTSCHRIFT

(45) Veröffentlichungstag der Patentschrift: **01.07.92**

(21) Anmeldenummer: **88117821.4**

(22) Anmeldetag: **26.10.88**

(51) Int. Cl.5: **E03F 3/06**, F16L 57/00, F16L 1/028, E21B 7/20, E21B 29/10

(54) **Verfahren zum Bearbeiten von Fugen an Betonrohren und Vorrichtung zur Durchführung des Verfahrens.**

(30) Priorität: **05.11.87 DE 3737596**

(43) Veröffentlichungstag der Anmeldung:
**10.05.89 Patentblatt 89/19**

(45) Bekanntmachung des Hinweises auf die Patenterteilung:
**01.07.92 Patentblatt 92/27**

(84) Benannte Vertragsstaaten:
**AT BE CH DE ES FR GB LI LU NL**

(56) Entgegenhaltungen:
**AT-B- 382 224     DD-A- 105 855**
**DE-A- 3 534 662   DE-A- 3 544 316**
**DE-B- 2 021 058   DE-B- 2 925 417**
**US-A- 3 830 530**

(73) Patentinhaber: **Denso-Chemie Wedekind KG**
**Felderstrasse 24**
**W-5090 Leverkusen(DE)**

(72) Erfinder: **Baur, Fritz**
**Mittelstrasse 4**
**W-5419 Urbach(DE)**

(74) Vertreter: **Langmaack, Jürgen, Dipl.-Ing. et al**
**Patentanwälte Maxton . Maxton . Langmaack**
**Goltsteinstrasse 93,VII Postfach 51 08 06**
**W-5000 Köln 51(DE)**

**Beschreibung**

Die Erfindung betrifft ein Verfahren zum Bearbeiten von in Umfangsrichtung verlaufenden Fugen im Innenraum von Betonrohren, insbesondere Stoßfugen an Vortriebsrohren aus Beton, wobei nach dem Verlegen des Rohrstranges in die Fugen ein strangförmiges Dichtungselement aus einem gummielastischen Werkstoff eingefügt wird.

Bei Rohrleitungen aus Beton, die in der Regel für Abwässer aller Art eingesetzt werden, besteht in zunehmendem Maße die Notwendigkeit, für eine größtmögliche Abdichtung zu sorgen. Bei einer Verlegung der Rohrleitungen im offenen Rohrgraben ist eine zuverlässige Abdichtung durch aufsetzbare oder eingeformte gummielastische Dichtungen möglich. In zunehmendem Maße wird jedoch die Verlegung von Rohrleitungen in Vortriebsbauweise vorgenommen, bei der die einzelnen Rohrschüsse von einer Preßgrube aus im vorgesehenen Niveau unter der Erde mittels hydraulischer Pressen durchs Erdreich getrieben werden. Die Vortriebsbauweise wurde bisher überwiegend für begehbare Rohrleitungen eingesetzt, da aufgrund der wirksam werdenden Kräfte mit eingebauten Dichtungen nicht gearbeitet werden kann und dementsprechend nach dem Verlegen des Rohrstranges die Fugen zwischen den einzelnen Schüssen gesondert abgedichtet werden mußten. Bei der Verwendung klassischer Rohrdichtungen besteht bei der Rohrverlegung in der Vortriebstechnik die Gefahr, daß durch Versteuern die zulässigen Toleranzen im Fugenbereich überschritten werden. Das führt zu Undichtigkeiten,mit der Folge, daß das im Rohrstrang geführte Abwasser durch kleine Undichtigkeiten nach außen dringen kann. Da bei derartigen Rohrleitungen das Aussickern über einen langen Zeitraum erfolgt, besteht bei schadstoffhaltigen Abwassern die Gefahr einer erheblichen Bodenverseuchung. Ebenso kann von außen Fremdwasser in die Rohrleitung eindringen. Hierdurch können Unterspülungen der Rohrleitung auftreten, die die Rohrleitung und die darüberliegende Straße gefährden.

Aus der DE-B1-29 25 417 ist es bekannt, an Betonrohren mit Kunststoffauskleidung die Stoßfuge benachbarter Rohre mit Hilfe eines Fugenbandes abzudichten. Hierzu wird das Fugenband randseitig mit Schweißbändern versehen, die mittel Heißluftdüsen und nachfolgender Andruckrolle sowohl mit dem Fugenband wie auch mit der Kunststoffauskleidung verschweißt werden. Die hierzu erforderliche Vorrichtung besteht im wesentlichen aus einem zweiteiligen, in Längsrichtung des Rohres verfahrbaren Wagen, der jeweils im Bereich der Stoßfuge verspannt werden kann und an dem der Schweißkopf mit seiner Andruckrolle drehbar gelagert ist.

Der Erfindung liegt nun die Aufgabe zugrunde, ein Verfahren der eingangs bezeichneten Art zu schaffen, das es erlaubt, am fertigverlegten Betonrohrstrang im Innenraum in Umfangsrichtung umlaufende Fugen zu bearbeiten, so daß für das anschließend einzubringende strangförmige Dichtungselement optimale Dichtungsbedingungen geschaffen sind.

Diese Aufgabe wird erfindungsgemäß dadurch gelöst, daß die jeweilige Fuge zumindest im Sohlenbereich des Rohres mit wenigstens einem Schneidwerkzeug, vorzugsweise einem umlaufenden Schneidwerkzeug, zumindest auf eine vorgegebene Fugentiefe aufgeschnitten wird. In besonders zweckmäßiger Ausgestaltung der Erfindung ist vorgesehen, daß das Schneidwerkzeug über den ganzen Innenumfang des Rohres durch die Fuge geführt wird. Hierdurch erhält die Fuge über die vom Dichtungselement auszufüllende Länge eine definierte Abmessung, so daß die für das Einbringen des strangförmigen, gummielastischen Dichtungselementes erforderliche Einbautiefe einwandfrei gegeben ist. Durch den Einsatz eines entsprechenden Schneidwerkzeuges können auch die Fugenseitenwände beschnitten werden, so daß hier eine definierte Fugenbreite gegeben ist. Dies ist insbesondere dann von Bedeutung, wenn Dichtungselemente mit hoher Verpressung eingesetzt werden sollen.

In einer Ausgestaltung der Erfindung ist vorgesehen, daß bei Vortriebsrohren mit eingelegtem Preßring aus Holz wenigstens ein in Fugenrichtung verlaufender Einschnitt in den Preßring eingebracht wird, der bis in die vorgegebene Fugentiefe reicht. Aus Gründen einer ausreichenden Flächenpressung sind derartige Preßringe in der Regel so dimensioniert, daß sie im Fugenbereich bis dicht an die Innenwandung des Rohres heranreichen. Aufgrund der hohen Zusammenpressung sind die hölzernen Preßringe jedoch so stark komprimiert, daß die für das Einbringen des Dichtelementes, insbesondere eines Dichtelementes mit hoher Verpressung erforderliche Fugentiefe durch ein Ausmeisseln eines Teils des Preßringes geschaffen werden muß. Hierbei werden praktisch immer die Fugenseitenwände mit beschädigt, so daß die für die Dichtwirkung erforderliche glattflächige Anlage zwischen Dichtelement und Fugenwandung nicht mehr gegeben ist und damit bereits von vorne herein Undichtigkeiten vorhanden sind, die auch durch die Anschmiegsamkeit des Dichtmaterials nicht behoben werden können. Andererseits sind derartige Rohre industriell vorgefertigt und weisen ebenfalls im Fugenbereich einwandfreie glattflächige Stirnflächen auf, die bei sorgfältiger Handhabung der Einzelrohre auch beim Verlegen nicht beschädigt werden und damit eine einwandfreie Dichtfläche bieten. Durch das Einschneiden des Preßringes wird hierbei die erforderliche Fugentiefe freigelegt. Durch das erfindungsgemäße Verfahren wird beispielsweise mit einem Scheibenfräser oder eine Kreissäge dann der Preßring auch in der vollen Dicke bis auf die vorgegebene Fugentiefe "ausgefräst". In der Regel genügt es jedoch, wenn mit einem kreissägenartigen Schneidwerkzeug nur ein Einschnitt in der erforderlichen Fugentiefe in den einzelnen Preßring eingebracht wird, durch den die Kompression in diesem Bereich aufgehoben wird. Die vorzugsweise zu beiden Seiten neben dem Einschnitt verbleibenden Holzreste können dann in einfacher Weise und ohne Beschädigung der durch die Stirnflächen der Rohre gebildeten Fugenseitenwände entfernt werden. Bei entsprechender Auslegung kann der Schnitt auch mit einem Hochdruckwasserstrahl-Schneidwerkzeug geführt werden.

In einer anderen Ausgestaltung der Erfindung ist insbesondere zur Bearbeitung von Fugen an Rohren, die ohne Preßring verlegt werden vorgesehen, daß zumindest die Fugenseitenwände mit wenigstens einem rotierenden Schneidwerkzeug bis in die vorgegebene Fugentiefe bearbeitet werden. Bei derart verlegten Rohren, bei denen die Stirnflächen der einzelnen Rohrstücke "knirsch" aneinanderliegen, aber auch bei als Rohrstrang über eine Wanderschalung gegossenen ununterbrochenen Rohrsträngen, bietet das erfindungsgemäße Verfahren die Möglichkeit, eine Fuge mit genau definierten Abmessungen zu schaffen, die es dann erlaubt, jeweils ein Dichtungselement mit definierter Verpressung einzubauen, so daß hinsichtlich der Dichtigkeit der betreffenden Rohrleitung auch Garantien abgegeben werden können. In bevorzugter Ausgestaltung der Erfindung ist hierbei vorgesehen, daß der Dichtungsstrang in die fertigbearbeitete Fuge eingerollt und dabei verpreßt wird. Da die Fugen sowohl in der Breite als auch in der Tiefe durch die Bearbeitung genau definierte Abmessungen erhalten, ist es somit möglich, ein strangförmiges Dichtungselement mit beispielsweise Kreisquerschnitt oder annäherndem Kreisquerschnitt in die Fuge einzurollen. Dies ist eine Verfahrensweise, die bisher nur an ebenflächigen Bauwerksfugen jedoch nicht im Innenbereich von Rohrleitungen eingesetzt wurde. Der Vorteil des Einrollens besteht vor allem in der möglichen hohen Verpressung, mit der der Dichtungsstrang eingebaut werden kann, so daß die Dichtung in eingebautem Zustand eine besonders gute Dichtungswirkung zeigt. Das Einrollen des Dichtungsstranges kann in einfacher Weise von einem Ansatzpunkt im Scheitelbereich der Rohrleitung fortlaufend mit Hilfe eines rotierenden scheibenförmigen Einrollwerkzeuges erfolgen, das mit seiner einen Fläche an einer Fugenseitenwand anliegt und in Verlegerichtung vorwärtsbewegend unter gleichzeitiger Drehung der Einrollscheibe den Dichtungsstrang um seine Längsachse drehend in die Fuge Einrollt. Eine Verdrillung des Dichtungsstranges ist weitgehend ausgeschlossen, da die Abrollbewegung des Dichtungsstranges auf der gegenüberliegenden freien Fugenseitenwand jeweils konstant ist.

Die Erfindung betrifft ferner eine Vorrichtung zum Bearbeiten von in Umfangsrichtung laufenden Fugen im Innenraum von Betonrohren, insbesondere Stoßfugen an Vortriebsrohren aus Beton, entsprechend dem erfindungsgemäßen Verfahren und/oder zum Einbringen eines strangförmigen gummielelastischen Dichtungselementes in die Stoßfuge.

Das Bearbeiten von Bauwerksfugen mit rotierenden Schneidwerkzeugen ist grundsätzlich bekannt. Die bisherigen Vorrichtungen waren jedoch allesamt konzipiert für ebene bzw. quasi ebene Bauwerksfugen und nicht geeignet für den Einsatz im Innenraum eines Betonrohres. Hier ist zum einen eine Handhabung über Kopf notwendig und zum anderen müssen auch Betonrohrleitungen bearbeitbar sein, die vom Innendurchmesser her nicht mehr begehbar sind und daher eine Handhabung eines schweren Schneidegerätes nicht mehr zulassen. Da die Fugen in Betonrohrleitungen in verhältnismäßig kurzen Abständen aufeinanderfolgen und verhältnismäßig kurze Fugenlängen jeweils zu bearbeiten sind, besteht darüber hinaus auch das Problem, daß die Vorrichtung einfach versetzbar sein muß.

Der Erfindung liegt daher die Aufgabe zugrunde, eine Vorrichtung zu schaffen, die die Bearbeitung von in Umfangsrichtung verlaufenden Fugen im Innenraum von Betonrohren ermöglicht.

Diese Aufgabe wird erfindungsgemäß dadurch gelöst, daß ein um die Rohrlängsachse rotierbares und radial gegen die Rohrwandung einstellbares Gestell vorgesehen ist, das mit einem Werkzeugträger zur Aufnahme eines antreibbaren Werkzeuges versehen ist. Mit Hilfe einer derartigen Vorrichtung ist es möglich, auch im Innenraum von Betonrohren in Umfangsrichtung verlaufende Fugen zu bearbeiten und zwar sowohl durch Ausfräsen eines hölzernen Preßringes die erforderliche Fugentiefe zu schaffen als auch durch ein Bearbeiten der Seitenwandungen einer vorhandenen Nut eine Fuge mit definierter Breite zu schaffen wie auch in einen ununterbrochenen Rohrstrang Scheinfugen einzufräsen, sowie das Einrollen eines Dichtungsstranges in die voraufgehend bearbeitete Fuge. Der Begriff "Werkzeug" umfaßt hierbei sowohl Schneidwerkzeuge zum Bearbeiten der Fuge als auch Werkzeuge zum Einbringen, insbesondere zum Einrollen eines Dichtungsstranges in die Fuge.

Dadurch, daß ein in radialer Richtung einstellbares Gestell verwendet wird, besteht die Möglichkeit, die Vorrichtung für unterschiedliche Rohrdurchmesser einzusetzen. Das Gestell kann hierbei beispielsweise drei radiale, gegen die Rohrwandung verspannbare Streben aufweisen, an denen ein Werkzeugträger drehbar gelagert ist, der zusammen mit dem montierten Werkzeug um die Rohrlängsachse drehend an der Innenwandung des Rohres entlang geführt werden kann. Bearbeitung der Fuge im Sinne der Erfindung ist auch das Einrollen einer strangförmigen Dichtung.

Für eine besonders zweckmäßige Ausgestaltung der erfindungsgemäßen Vorrichtung ist vorgesehen, daß das Gestell sich im wesentlichen diametral über den Rohrinnenraum erstreckt und in seiner Länge einstellbar ausgebildet ist, daß an seinen freien Enden jeweils wenigstens ein Laufrad angeordnet ist, daß wenigstens ein Laufrad über einen Antrieb antreibbar ist, daß der Werkzeugträger in radialer Richtung einstellbar angeordnet ist und daß wenigstens einem der Laufräder wenigstens ein Spurrad zugeordnet ist, das in der Fuge geführt ist. Diese Vorrichtung arbeitet selbstzentrierend, weist das geringstmögliche Gewicht auf, da sie alle zusätzlichen Klemmelemente eines feststehenden Haltegestells nicht aufweist. Durch die Anordnung von Spurrädern ist eine einwandfrei Ausrichtung des Schneidwerkzeuges in bezug auf den Verlauf der Fuge gewährleistet, was insbesondere beim Bearbeiten eines hölzernen Preßringes zum Schutze des Schneidwerkzeuges von Vorteil ist. Wenn die Laufräder, das Werkzeug und das Spurrad in einer gemeinsamen Drehebene liegen, erfolgt die Führung des Werkzeuges unmittelbar in der Arbeitsebene selbst, so daß ein geringfügiger Winkelversatz zwischen den aneinandergrenzenden Rohrstücken keinen Einfluß auf die Führung des Werkzeugs hat. In besonders zweckmäßiger Ausgestaltung der Erfindung ist vorgesehen, daß die Laufräder als parallel geführte Doppelräder ausgebildet und unabhängig, vorzugsweise selbsttätig radial einstellbar sind. Diese Anordnung vermag einen Versatz der aneinandergrenzenden Rohrenden auszugleichen, so daß das Werkzeug gleichwohl mit der gewünschten Genauigkeit geführt ist.

Während es grundsätzlich möglich ist, schneidende oder fräsende Werkzeuge beliebiger Art einzusetzen, ist die Verwendung eines scheibenförmigen Schneidwerkzeuges bevorzugt, da hierdurch die Einsatzmöglichkeiten vervielfältigt werden. So ist es dann möglich, mit dem gleichen Werkzeug sowohl den Holzwerkstoff des Preßringes als auch den Betonwerkstoff der Seitenwände zu bearbeiten oder in als Strang gefertigten Rohrleitungen entsprechende Scheinfugen einzufräsen. Ein weiterer Vorteil eines scheibenförmigen Werkzeuges besteht darin, daß auch Rohre mit von der Kreisform im Sohlenbereich abweichendem Querschnitt bearbeitet werden können, da bei derartigen scheibenförmigen Werkzeugen Durchmessersprünge, insbesondere im Übergangsbereich zwischen dem kreisförmigen oberen Teil und den von der Kreisform abweichenden unteren Teil einfacher beherrschbar sind. Besonders zweckmäßig ist es, wenn mehrere Schneidwerkzeuge nebeneinander, vorzugsweise in Umfangsrichtung versetzt zueinander, angeordnet sind. Hierdurch ist es möglich, auch in den Betonwerkstoff Fugen in voller Breite und in voller Tiefe in einem Arbeitsgang einzuarbeiten.

In zweckmäßiger Ausgestaltung ist ferner vorgesehen, daß das Radkörper zumindest des Spurrades eine scheibenartige Führungskante aufweist. Mit der Führungskante wird das Spurrad in der Fuge gehalten, so daß hier entsprechende Seitenkräfte aufgenommen werden können. Aber auch die Laufräder können mit einer derartigen Führungskante versehen sein. Die Ausbildung als Scheibe sowohl für Laufrad als auch Spurrad ist insbesondere für solche Rohre von Bedeutung, die im Sohlenbereich eine von der Kreisform abweichende Querschnittsform aufweisen. Bei derartigen Rohren, die gleichwohl mit kreisförmigen Preßringen verlegt werden, kann dann die Vorrichtung auf dem Innenumfang des Preßringes abrollbar abgestützt werden und der von der Kreisform abweichende Sohlenbereich unter entsprechender Verstellung des Werkzeugträgers bearbeitet werden. Nach Bearbeitung der Hälfte des Umfanges muß lediglich ein Spurrad auf die neue Fugentiefe eingestellt werden.

In weiterer Ausgestaltung der Erfindung ist vorgesehen, daß das Spurrad über eine Feder am Gestell abgestützt ist. Während der Abstand der Laufräder fest vorgegeben sein kann, da die Rundheit derartiger Betonrohre aufgrund ihrer industriellen Fertigung nur innerhalb eines geringen. Toleranzfeldes abweicht und geringe Abweichungen der Rundlaufgenauigkeit durch elastische Laufflächen an den Laufrädern aufgefangen werden können, ist durch die federnde Abstützung des Spurrades dafür Sorge getragen, daß sich die Vorrichtung bei ihrem Umlauf nicht innerhalb des Rohres verkeilt.

In zweckmäßiger Ausgestaltung ist ferner vorgesehen, daß das Werkzeug in Umlaufrichtung gesehen zwischen Laufrad und Spurrad angeordnet ist. Hierdurch ist eine einwandfreie Führung des Werkzeugs und zugleich eine einwandfreie Aufnahme von Seitenkräften gewährleistet.

In einer bevorzugten Ausgestaltung der Erfindung ist ferner vorgesehen, daß das Gestell im wesentlichen stabförmig ausgebildet ist und aus zwei relativ zueinander verschiebbaren und gegeneinander verriegelbaren Teilen besteht und daß der Werkzeugträger mit einem der Gestellteile verbunden ist. Eine derartige Gestellform ergibt eine sehr robuste und einfach zu handhabende Vorrichtung.

In weiterer Ausgestaltung der Erfindung, insbesondere für ein stabförmig ausgebildetes Gestell ist vorgesehen, daß zum Verschieben und Verriegeln der Gestellteile gegeneinander eine Spreizvorrichtung am Gestell angeordnet ist. Eine derartige Spreizvorrichtung kann beispielsweise kniehebelartig oder nach Art eines Basküle-Verschlusses ausgebildet sein.

In weiterer Ausgestaltung der Erfindung ist vorgesehen, daß jedes Laufrad über wenigstens ein Schneckengetriebe mit dem Antrieb verbunden ist. Ein Schneckengetriebe ist praktisch spielfrei und ermöglicht in einfacher Weise den bei der Bearbeitung von Betonwerkstoffen notwendigen geringen Vorschub des Werkzeugs.

Die Erfindung wird anhand schematischer Zeichnungen von Ausführungsbeispielen näher erläutert. Es zeigen:

Fig. 1    eine Ansicht einer Vorrichtung in Achsrichtung des Rohres gesehen,

Fig. 2    eine Seitenansicht der Vorrichtung gem. Fig. 1,

Fig. 3    eine Stirnansicht eines Spurrades,

Fig. 4    einen Querschnitt durch eine Bauwerksfuge mit der Lage des Dichtungsstranges zu Beginn des Einrollvorganges,

Fig. 5    die Lage des Dichtungsstranges in der Fuge nach Abschluß des Einrollvorganges.

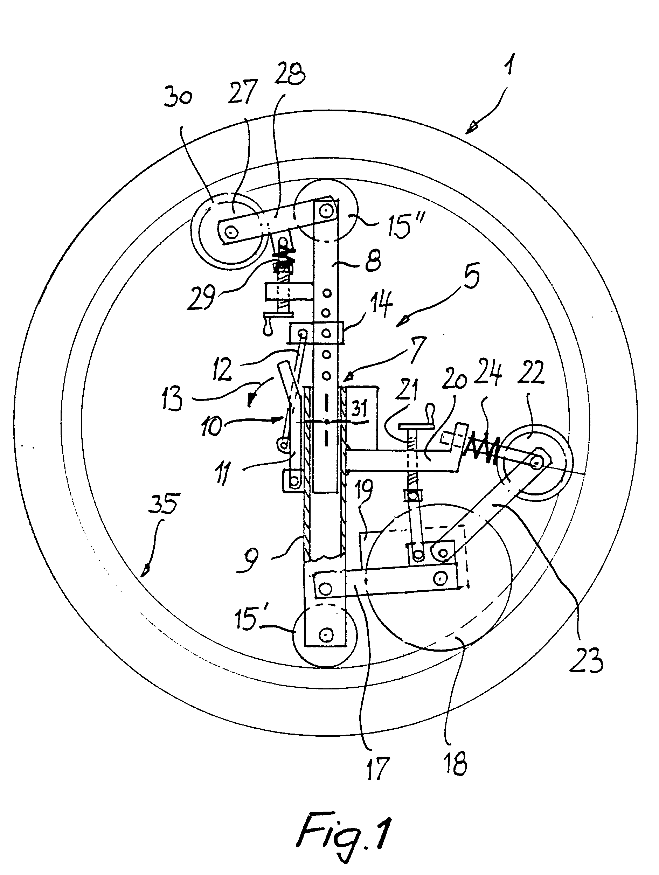

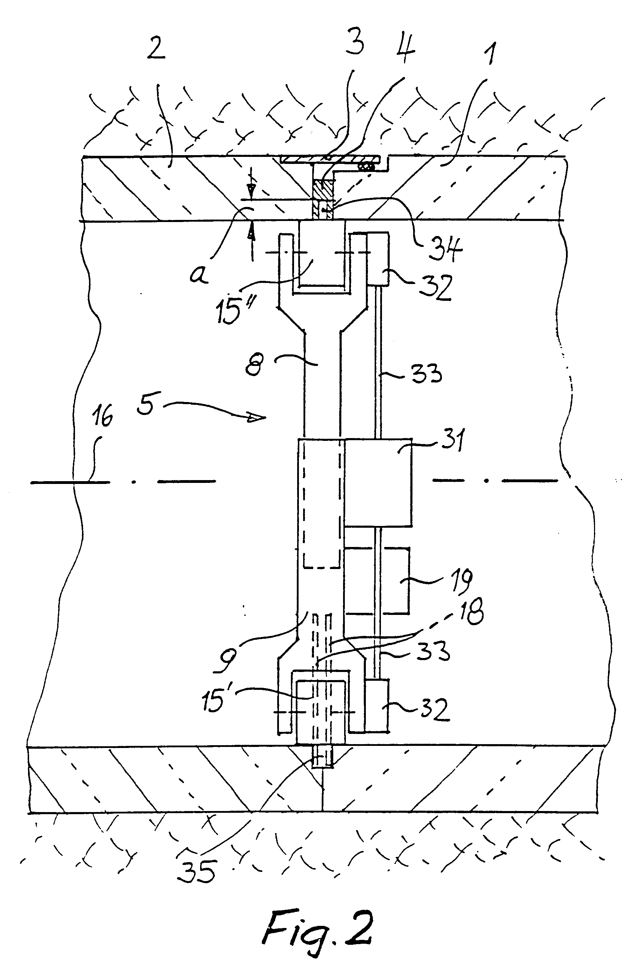

Fig. 1 und 2 zeigen in einem Querschnitt und in einem Längsschnitt den Teil eines im Erdreich im Vortriebsverfahren verlegten Rohrstranges, der aus mehreren Einzelrohren 1 und 2 zusammengesetzt ist. Das jeweils rückwärtige Ende eines Rohrstückes ist hier mit einem Blechkragen 3 versehen, der für die Zentrierung des jeweils am hinteren Ende angesetzten nächsten Rohrstückes dient. Wie in Fig. 2 für den Bereich der oberen Rohrwandung dargestellt, wird in die Stoßfuge jeweils vor dem Einschieben des nächstfolgenden Rohrstückes ein Preßring aus Holz eingelegt, der die Stirnfläche des Rohrkörpers gegen Beschädigungen schützen soll. Es ist aber auch möglich, wie für den unteren Teil der Rohrwandung dargestellt. die Stirnflächen der beiden Rohrstücke, wenn sie im offenen Rohrgraben verlegt werden, ohne eine Zwischenlage zu verlegen.

Nach dem Verlegen des Rohrstranges müssen nun die Stoßfugen von innen her abgedichtet werden. Hierzu muß ein Freiraum zur Aufnahme eines Dichtungselementes eingearbeitet werden. Bei einer Verlegung mit Preßring 4 muß hierbei der Holzwerkstoff von innen her bis in eine genügende Tiefe entfernt werden. Durch den Preßdruck ist jedoch der Holzwerkstoff so verfestigt, daß eine Entfernung von Hand praktisch nicht möglich ist. Bei einer Verlegung im offenen Rohrgraben, also ohne Preßring, muß bei nicht ordnungsgemäßer Verlegung in den Betonwerkstoff eine Fuge von entsprechender Tiefe und Breite eingefräst werden.

Bei Rohren mit einem Durchmesser, der eine Begehung des Innenraumes möglich macht, wird zur Durchführung dieser Arbeiten in den Innenraum eine Vorrichtung 5 zur Fugenbearbeitung eingeführt. Diese weist ein im wesentlichen stabförmiges Gestell 7 auf, das aus zwei Teilen 8 und 9 zusammengesetzt ist, die teleskopartig ineinander verschiebbar ausgebildet sind. Mit Hilfe einer Spreizvorrichtung 10, die bei dem dargestellten Ausführungsbeispiel aus einem am Teil 9 gelagerten Hebel 11 und einer den Hebel 11 mit dem Teil 8 verbindenden Zugstange 12 besteht, kann nun nach Umlegen des Hebels 11 in Richtung des Pfeiles 13 die Länge des Gestelles 7 verkürzt werden. Die Zugstange 12 ist hierbei an einem umsteckbaren Reiter 14 mit dem Teil 8 verbunden, so daß hier die Grundlänge durch Umsetzen des Reiters 14 auf unterschiedliche Rohrdurchmesser eingestellt werden kann.

An den beiden Enden des Gestelles 7 ist je ein Laufrad 15′, 15″ angeordnet, das zweckmäßigerweise mit einer Lauffläche aus einem elastischen Material versehen ist. Nach dem Einbringen des Gestelles 7 in den Rohrinnenraum und der Positionierung im Bereich einer Stoßfuge wird der Hebel 11 gegen die Richtung des Pfeiles 13 umgelegt, so daß das Gestell 7 sich über die Laufräder 15 an der Innenwandung des Rohres abstützt und zugleich auf der Innenwandung um die Rohrlängsachse 16 rotierend abrollen kann.

Am Teil 9 ist ein Werkzeugträger 17 befestigt, der bei dem dargestellten Ausführungsbeispiel aus einer Wippe besteht, an der ein scheibenförmiges Werkzeug 18 befestigt ist, das von einem auf dem Werkzeugträger 17 ebenfalls gelagerten Motor 19 angetrieben wird. Je nach Einsatzfall kann hier ein Elektromotor, ein Hydraulikmotor oder auch eine Preßluftmotor eingesetzt werden. Am Teil 9 ist ferner ein Stützarm 20 befestigt, in dem eine Stellspindel 21 gelagert ist, über die der Werkzeugträger 17 in radialer Richtung verstellt werden kann.

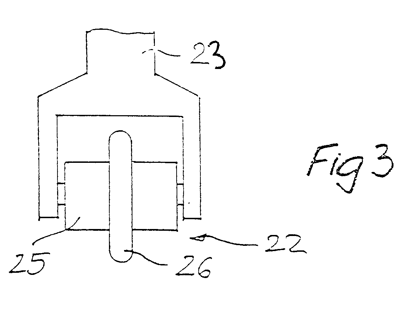

Am Gestell 7 ist ferner ein Spurrad 22 gelagert, das bei dem dargestellten Ausführungsbeispiel über eine Schwinge 23 mit dem Werkzeugträger 17 verbunden ist und über eine in der Anpreßkraft einstellbare Schraubendruckfeder 24 am Stützarm 20 abgestützt ist. Das Spurrad 22 ist in Fig. 3 in einer Seitenansicht dargestellt. Der Radkörper 25 ist hierbei mit einem Spurkranz 26 versehen, der in die bereits freigearbeitete Fuge eintaucht und hierbei für eine einwandfreie Ausrichtung der Anordnung sorgt.

Bei dem dargestellten Ausführungsbeispiel ist auch der Laufrolle 15″ am anderen Gestellende ein weiteres Spurrad 27 angeordnet, das über eine Schwinge 28 am Gestell 7 angelenkt ist und ebenfalls über eine einstellbare Schraubendruckfeder 29 angedrückt werden kann. Das Spurrad 27 ist mit seinem Spurkranz 30 so ausgebildet, daß es in der noch unbearbeiteten Ausgangsfuge abrollen kann und ein seitliches Auswandern des Gestells verhindert. Die Laufräder 15', 15" sind zweckmäßigerweise rollen- oder walzenförmig ausgebildet, um im Zusammenwirken mit der Krümmung der Rohrinnenwandung bereits eine Zentrierung zu bewirken.

Am Gestell 7, zweckmäßigerweise am Teil 9, ist ein weiterer Antriebsmotor 31 gelagert, der je nach Einsatzbereich als Elektromotor, Hydraulikmotor oder Preßluftmotor ausgebildet sein kann und über den die Läufräder 15', 15" gleichsinnigsynchron drehend angetrieben werden. Wie Fig. 2 zeigt, ist jedem Laufrad ein Untersetzungsgetriebe 32, vorzugsweise ein Schneckengetriebe, zugeordnet, das über eine Kuppelwelle 33 jeweils mit dem Motor 31 verbunden ist. Der Motor 31 kann hierbei zur Erzielung einer hohen Untersetzung ebenfalls als Getriebemotor ausgebildet sein.

Zum Bearbeiten einer Fuge an Vortriebrohren, die mit einem Preßring 4 aus Holz verlegt sind, wird als Werkzeug 18 eine Kreissäge eingesetzt, die in den Preßring 4, wie in Fig. 2 dargestellt, einen Schlitz 34 einschneidet, der in seiner Tiefe a etwas größer ist als die erforderliche Fugentiefe. Die Drehzahl des kreissägenförmigen Werkzeugs wird hierbei über den Antriebsmotor 19 vorgegeben, während die Vorschubgeschwindigkeit über den Antrieb 31 der Laufräder 15 bestimmt wird. Nachdem nun ein Schlitz 34 in der erforderlichen Tiefe über den vollen Rohrumfang eingearbeitet worden ist, wird durch Umlegen des Hebels 11 der Teil 8 des Gestelles 7 in den Teil 9 eingeschoben, so daß die Vorrichtung 5 insgesamt in Längsrichtung des Rohres zur nächsten Fuge versetzt werden kann. Durch das Einarbeiten des Schlitzes ist aus dem Preßring 4 der Druck herausgenommen, so daß die zu beiden Seiten stehengebliebenen Reste leicht von Hand und ohne Beschädigung der die Fugenseitenwände bildenden Rohrstirnflächen herausgebrochen werden kann. Bei entsprechender Schnittbreite der Kreissäge sind die verbleibenden Holzreste sehr gering.

Bei dem für den unteren Teil der Rohrwandung dargestellten Einsatzfall bei im offenen Rohrgraben unsachgemäß verlegten Rohren, werden Steinsägeblätter eingesetzt. Da hierbei die Fuge 35 sowohl in der Tiefe als auch in der Breite unmittelbar aus dem Betonwerkstoff freigeschnitten werden muß, ist hier vorgesehen, je nach Fugenbreite zwei oder mehr nebeneinander angeordnete Schneidblätter als Schneidwerkzeug vorzusehen. Die Schneidblätter können hierbei in Arbeitsrichtung versetzt hintereinander angeordnet sein, wobei zweckmäßigerweise die beiden die Fugenseitwände freischneidenden Blätter gleichachsig zueinander angeordnet sind, so daß das nachgeordnete Schneidwerkzeug lediglich den zwischen den beiden gleichachsig angeordneten Schneidblättern verbleibenden Materialsteg zu entfernen hat. Damit ist eine symmetrische Belastung der Schneidwerkzeuge gegeben und ein Auswandern der Vorrichtung durch einen unsymetrischen Schneiddruck vermieden.

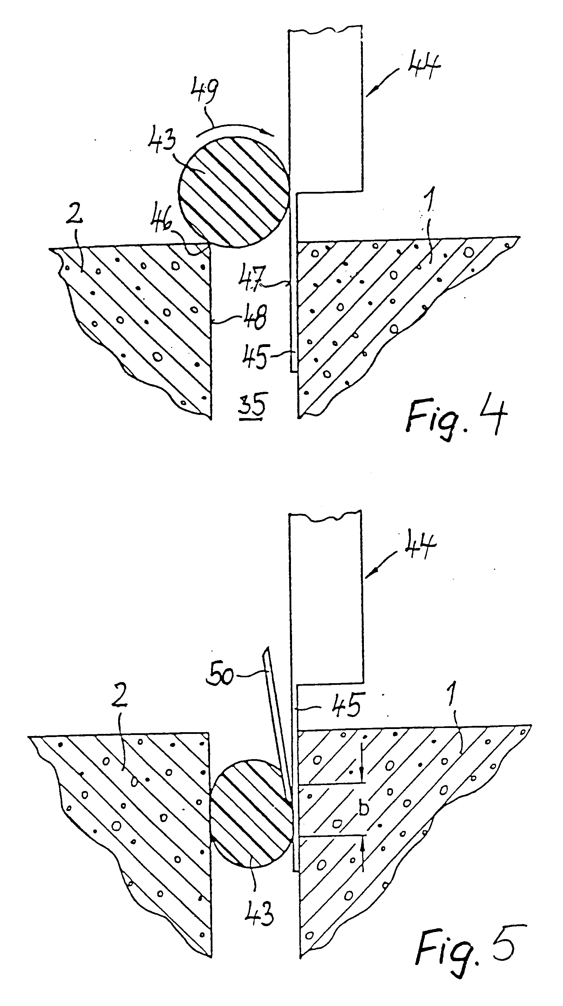

Nach dem Bearbeiten der Fugen wird anschließend ein strangförmiges Dichtungselement in die Fuge eingebracht. Hierbei können Profilstränge eingebracht werden, die seitliche Lippen aufweisen und die für eine Abdichtung sorgen. Die Abdichtung ist jedoch im wesentlichen von der Verpressung des Dichtelementes abhängig, so daß einem Dichtungselement der Vorzug zu geben ist, das mit einer hohen Verpressung in die Fuge eingearbeitet wird. Hierzu lassen sich die vorstehend beschriebenen Vorrichtungen zum Bearbeiten der Fuge in gleicher Weise mit Vorteil einsetzen. Hierzu ist es lediglich erforderlich, das Schneidwerkzeug vom Werkzeugträger 17 zu lösen und eine Einrollvorrichtung aufzusetzen, die im wesentlichen aus einer Einrollscheibe besteht, so daß insoweit die schematische Darstellung gem. Fig. 1 in gleicher Weise gilt. Die Kinematik des Einrollvorganges wird anhand der Fig. 4 und 5 näher beschrieben. In die Fuge 35 zwischen zwei Rohrstücken 1 und 2 wird ein Dichtungsstrang 43 mit kreisförmigem Querschnitt unter gleichzeitiger Verpressung eingebracht. Der Durchmesser des Dichtungsstranges 43 beträgt hierbei etwa das 1,5-fache der Breite der Fuge 35. Der Dichtungsstrang 43 wird hierbei mit Hilfe einer drehbaren Einrollscheibe 44 eingerollt, deren Durchmesser ein Vielfaches des Durchmessers des Dichtungsstranges aufweist. Die Einrollscheibe 44 taucht mit ihrem Rand 45 in die Fuge 35 ein und wird nun an der Seitenwandung der Fuge so entlang geführt, daß sie mit konstanter Tiefe um ein bestimmtes Maß in die Fuge eintaucht, wie dies aus Fig. 4 ersichtlich ist. Der einzubringende Dichtungsstrang 43 liegt nun einerseits auf der Kante 46 der Fuge und andererseits an der dem freien Fugenraum zugekehrten Fläche 47 der Einrollscheibe 44 an. Wird die Einrollscheibe 44 in Drehung versetzt und gleichzeitig in Längsrichtung der Fuge vorgeschoben, so ergibt sich aufgrund der Klemmung der Schneide 45 zwischen dem Dichtungsstrang 43 einerseits und der Fugenwandung 48 des anderen Rohrteiles 2 andererseits eine Kraftwirkung, durch die auf den Dichtungsstrang an seiner Berührungsstelle auf der Fläche 8 der Schneide 45 eine in etwa vertikal nach unten gerichtete, tangential am Dichtungsstrang 43 angreifende Kraft ausgeübt wird. Da der Dichtungsstrang 43 aufgrund seiner Elastizität unter dem Einfluß der auf ihn wirkenden Kräfte zunächst an der der Einrollscheibe gegenüberliegenden Kante 46 der Fuge 35 eingedrückt wird, ergibt sich hier eine Verklemmung, so daß im weiteren Verlauf der Scheibendrehung bei gleichzeitigem Vorschub in Fugenlängsrichtung der Dichtungsstrang 43 entsprechend dem Pfeil 49 der zunächst nach unten gerichteten Drehbewegung der Scheibe folgt, in die Fuge eingerollt wird. Der Dichtungsstrang 43 rollt hierbei unter gleichzeitiger Zusammenpressung auf der Fugenwandung 48 ab.

Die vorstehend beschriebene Rollbewegung des Dichtungsstranges 43 ist beendet, wenn die Schneide 45 ihre tiefste Stellung in der Fuge erreicht hat. Diese Position ist in Fig. 5 dargestellt. Durch ein in Arbeitsrichtung etwas nachlaufendes Sperrad 50 wird nun verhindert, daß die anschließende Aufwärtsbewegung der Einrollscheibe 44 den Dichtungsstrang 43 wieder aus der Fuge herausrollt. Wie Fig. 5 zeigt, weist das Sperrad 50 eine geringere Eintauchtiefe auf als die Einrollscheibe 44. Es ist hierbei mit seiner Eintauchtiefe zweckmäßigerweise so bemessen, daß sie nur etwa ein Drittel der Verpressungsbreite B des Dichtungsstranges 43 beträgt.

Aus der eingangs beschriebenen Funktionsweise der Vorrichtung 5 zum Bearbeiten der Fuge ist nun ohne weiteres ersichtlich, daß dieser Einrollvorgang in gleicher Weise wie das Bearbeiten der Fugen vorgenommen werden kann und damit auch das Abdichten der Fugen vollständig mechanisiert werden kann. Der lose zugeführte Dichtungsstrang 43 wird beim Verfahren der Vorrichtung entlang der Fuge bei gleichzeitiger Drehung der Einrollscheibe zusammengepreßt und um seine Längsachse drehend und auf der freien Fugenwandung abrollend, in die Fuge eingebracht. Da aufgrund der vorgegebenen Eintauchtiefe der Schneide 45 der Einrollscheibe dieser Abrollweg genau definiert ist, wird der Dichtungsstrang auch weitgehend drallfrei in die Fuge eingefügt. Die auf den Dichtungsstrang beim Einführen im wesentlichen nur tangential zu seinem Außenumfang angreifenden Kräfte bewirken, daß der Dichtungsstrang praktisch auch zugspannungsfrei in der Bauwerksfuge liegt. Durch die Verwendung der anhand von Fig. 1 und 2 beschriebenen Vorrichtung 5 ist es somit möglich, sowohl Stoßfugen als auch Scheinfugen über ihren vollen Umfang durch Einbringen eines Dichtungselementes abzudichten.

## Patentansprüche

1. Verfahren zum Bearbeiten von in Umfangsrichtung umlaufenden Fugen im Innenraum von Betonrohren, insbesondere Stoßfugen an Vortriebsrohren aus Beton, wobei nach dem Verlegen des Rohrstranges in die Fugen ein strangförmiges Dichtungselement aus einem gummielastischen Werkstoff eingefügt wird, dadurch **gekennzeichnet,** daß die jeweilige Fuge zumindest im Sohlenbereich des Rohres wenigstens mit einem Schneidwerkzeug, vorzugsweise einem umlaufenden Schneidwerkzeug, zumindest auf eine vorgegebene Fugentiefe aufgeschnitten wird.

2. Verfahren nach Anspruch 1, dadurch gekennzeichnet, daß das Schneidwerkzeug über den ganzen Innenumfang des Rohres durch die Fuge geführt wird.

3. Verfahren nach Anspruch 1 oder 2, dadurch gekennzeichnet, daß bei Vortriebsrohren mit eingelegtem Preßring aus Holz wenigstens ein in Fugenrichtung verlaufender Einschnitt in den Preßring eingebracht wird, der bis in die vorgegebene Fugentiefe reicht.

4. Verfahren nach Anspruch 3, dadurch gekennzeichnet, daß die neben dem Einschnitt verbleibenden Holzreste von Hand entfernt werden.

5. Verfahren nach einem der Ansprüche 1 bis 4, insbesondere zur Bearbeitung von Stoßfugen an Rohren, die ohne Preßring verlegt sind, dadurch gekennzeichnet, daß zumindest die Fugenseitenwände mit wenigstens einem rotierenden Schneidwerkzeug bis in die vorgegebene Fugentiefe bearbeitet werden.

6. Verfahren nach einem der Ansprüche 1 bis 5, dadurch gekennzeichnet, daß der Dichtungsstrang in die bearbeitete Fuge eingerollt und dabei verpreßt wird.

7. Vorrichtung, zum Bearbeiten von in Umfangsrichtung laufenden Fugen im Innenraum von Betonrohren insbesondere Stoßfugen an Vortriebsrohren aus Beton, entsprechend dem Verfahren nach den Ansprüchen 1 bis 6 und/oder zum Einbringen eines strangförmigen gummielastischen Dichtungselementes in die Stoßfuge, dadurch gekennzeichnet, daß ein um die Rohrlängsachse (16) rotierbares und radial gegen die Rohrwandung zustellbares Gestell vorgesehen ist, das mit einem Werkzeugträger (17) zur Aufnahme eines antreibbaren Werkzeuges (18) versehen ist.

8. Vorrichtung nach Anspruch 7, dadurch gekennzeichnet, daß das Gestell sich im wesentlichen diametral über den Rohrinnenraum erstreckt und in bezug auf den Rohrdurchmesser einstellbar ausgebildet ist, daß an seinem freien Ende jeweils wenigstens ein Laufrad (15', 15") angeordnet ist, daß wenigstens ein Laufrad (15', 15") über einen Antrieb (31) antreibbar ist, daß der Werkzeugträger (17) in radialer Richtung einstellbar angeordnet ist und daß wenigstens einem der Laufräder (15′, 15″) wenigstens ein Spurrad (22, 30) zugeordnet ist, das in der Fuge (35) geführt ist.

9. Vorrichtung nach Anspruch 7 oder 8, dadurch gekennzeichnet, daß wenigstens zwei Laufräder am Gestell vorgesehen sind, die über einen Antrieb gleichsinnig synchron antreibbar sind.

10. Vorrichtung nach einem der Ansprüche 7 bis 9, dadurch gekennzeichnet, daß die Laufräder als parallel geführte Doppelräder ausgebildet und unabhängig voneinander vorzugsweise selbstätig radial einstellbar sind.

11. Vorrichtung nach einem der Ansprüche 7 bis 10, dadurch gekennzeichnet, daß als Werkzeug (18) wenigstens ein scheibenförmiges Schneidwerk am Werkzeugträger (17) angeordnet ist.

12. Vorrichtung nach Anspruch 11, dadurch gekennzeichnet, daß mehrere Schneidwerkzeuge (18) nebeneinander, vorzugsweise in Umfangsrichtung versetzt zueinander angeordnet sind.

13. Vorrichtung nach einem der Ansprüche 7 bis 12, dadurch gekennzeichnet, daß zumindest das Spurrad (22) eine scheibenartige Führungskante (26) aufweist.

14. Vorrichtung nach einem der Ansprüche 7 bis 13, dadurch gekennzeichnet, daß das Spurrad (22) über eine Feder (24) am Gestell (7) abgestützt ist.

15. Vorrichtung nach einem der Ansprüche 7 bis 14, dadurch gekennzeichnet, daß das Werkzeug (18) in Umlaufrichtung gesehen zwischen Laufrad (15′) und Spurrad (22) angeordnet ist.

16. Vorrichtung nach einem der Ansprüche 7 bis 15, dadurch gekennzeichnet, daß das Gestell (7) im wesentlichen stabförmig ausgebildet ist und aus zwei relativ zueinander verschiebbaren und gegeneinander verriegelbaren Teilen (8, 9) besteht und daß der Werkzeugträger (17) mit einem der Gestellteile (9) verbunden ist.

17. Vorrichtung, insbesondere nach Anspruch 16, dadurch gekennzeichnet, daß zum Verschieben und Verriegeln der beiden Gestellteile (8, 9) gegeneinander eine Spreizvorrichtung (10; 40) am Gestell (7) angeordnet ist.

18. Vorrichtung nach einem der Ansprüche 7 bis 17, dadurch gekennzeichnet, daß jedes Laufrad (15′, 15″) über wenigstens ein Schneckengetriebe (32) mit dem Antrieb (31) verbunden ist.

**Claims**

1. A method for working joints which run around in the circumferential direction in the interior of concrete pipes, in particular butt joints in concrete propelled pipes, in which after the piping has been laid a strand-shaped sealing element made of a rubber-elastic material is inserted into the joints, characterised in that the respective joint is cut at least to a predetermined joint depth at least with one cutting tool, preferably a revolving cutting tool, at least in the floor region of the pipe.

2. A method according to claim 1, characterised in that the cutting tool is guided by the joint across the entire inner periphery of the pipe.

3. A method according to Claim 1 or 2, characterised in that in propelled pipes with an inserted wooden shaping ring, at least one incision extending in the direction of the joint is made in the shaping ring, which incision extends as far as the predetermined joint depth.

4. A method according to Claim 3, characterised in that the remnants of wood remaining adjacent to the incision are removed by hand.

5. A method according to one of Claims 1 to 4, in particular for working butt joints in pipes which are laid without a shaping ring, characterised in that at least the joint side walls are worked as far as the predetermined joint depth with at least one rotating cutting tool.

6. A method according to one of Claims 1 to 5, characterised in that the sealing strand is rolled into the worked joint and is thereby compressed.

7. An apparatus for working joints which run around in the circumferential direction in the interior of concrete pipes, in particular butt joints in concrete propelled pipes, corresponding to the method according to Claims 1 to 6 and/or for introducing a strand-shaped rubber-elastic sealing element into the butt joint, characterised in that a frame is provided which is rotatable about the longitudinal pipe axis (16) and can be adjusted radially against the pipe wall, and which is provided with a tool holder (17) for receiving a tool (18) which can be driven.

8. An apparatus according to Claim 7, characterised in that the frame extends substantially diametrically across the interior of the pipe and is constructed to be adjustable relative to the pipe diameter, that at least one wheel (15', 15") is located in each case at its free end, that at least one wheel (15', 15") can be driven by a drive mechanism (31), that the tool holder (17) is arranged to be adjustable in the radial direction and that at least one of the wheels (15', 15") is allocated at least one gauge wheel (22, 30) which is guided in the joint (35).

9. An apparatus according to Claim 7 or 8, characterised in that at least two wheels are provided on the frame, which wheels can be driven synchronously in the same direction by a drive mechanism.

10. An apparatus according to one of Claims 7 to 9, characterised in that the wheels are constructed as double wheels guided in parallel and are radially adjustable, preferably automatically, independent of one another.

11. An apparatus according to one of Claims 7 to 10, characterised in that at least one disc-shaped cutting mechanism is located as the tool (18) on the tool holder (17).

12. An apparatus according to Claim 11, characterised in that a plurality of cutting tools (18) are arranged adjacent to one another, preferably offset to one another in the circumferential direction.

13. An apparatus according to one of Claims 7 to 12, characterised in that at least the gauge wheel (22) has a disc-like guide edge (26).

14. An apparatus according to one of Claims 7 to 13, characterised in that the gauge wheel (22) is supported on the frame (7) by means of a spring (24).

15. An apparatus according to one of Claims 7 to 14, characterised in that the tool (18), viewed in the circumferential direction, is located between the wheel (18') and the gauge wheel (22).

16. An apparatus according to one of Claims 7 to 15, characterised in that the frame (7) is substantially rod-shaped and consists of two parts (8, 9) which are movable relative to one another and can be locked against one another, and that the tool holder (17) is connected to one of the frame parts (9).

17. An apparatus, in particular according to Claim 16, characterised in that an expanding means (10; 40) is located on the frame (7) for moving and locking the two frame parts (8, 9) against each other.

18. An apparatus according to one of Claims 7 to 17, characterised in that each wheel (15', 15") is connected to the drive mechanism (31) by at least one worm gear (32).

## Revendications

1. Procédé d'usinage de joints ouverts continus dans la direction périphérique, dans l'espace intérieur de tuyaux en particulier de joints ouverts d'about sur tuyaux en béton posés à l'avancement, procédé dans lequel, après avoir posé la ligne de tuyaux, on insère dans les joints ouverts un élément d'étanchéité en forme de boudin en un matériau à élasticité de caoutchouc, procédé caractérisé par le fait qu'au moins dans la zone du radier du tuyau on usine le joint ouvert respectif au moins avec un outil de coupe, de préférence avec un outil de coupe parcourant la périphérie, au moins sur une profondeur de joint ouvert prescrite.

2. Procédé selon la revendication 1, caractérisé par le fait que l'outil de coupe est guidé par le joint ouvert sur toute la périphérie intérieure du tuyau.

3. Procédé selon la revendication 1 ou la revendication 2, caractérisé par le fait que dans le cas des tuyaux posés à l'avancement avec couronne de bois insérée à ajustement forcé, on procède, dans la couronne posée à ajustement forcé, à au moins une incision qui est orientée dans la direction du joint ouvert et qui atteint la profondeur prescrite du joint ouvert.

4. Procédé selon la revendication 3, caractérisé par le fait que l'on enlève à la main les restes de bois subsistant à côté de l'incision.

5. Procédé selon l'une des revendications 1 à 4, en particulier pour l'usinage de joints ouverts d'about sur des tuyaux posés sans couronne insérée à ajustement forcé, caractérisé par le fait que l'on usine au moins les parois latérales du joint ouvert avec au moins un outil de coupe tournant jusqu'à la profondeur prescrite du joint ouvert.

6. Procédé selon l'une des revendications 1 à 5, caractérisé par le fait que l'on roule le boudin d'étanchéité dans le joint ouvert usiné en l'y comprimant.

7. Dispositif pour usiner des joints ouverts continus dans la direction périphérique dans l'espace intérieur de tuyaux en béton, en particulier de joints ouverts d'about sur tuyaux en béton posés à l'avancement, selon le procédé des revendications 1 à 6, et/ou pour insérer un élément d'étanchéité en forme de boudin à élasticité de caoutchouc dans le joint ouvert, dispositif caractérisé par le fait qu'est prévu un châssis qui peut tourner autour de l'axe longitudinal (16) du tuyau, que l'on peut amener radialement contre la paroi du tuyau et qui est muni d'un porte-outil (17) pour recevoir un outil (18) qui peut être entrainé.

8. Dispositif selon la revendication 7, caractérisé par le fait que le châssis s'étend sensiblement diamétralement sur l'espace intérieur du tuyau et qu'il est conçu pouvant s'adapter au diamètre du tuyau, qu'à son extrémité libre est respectivement disposé au moins un galet de roulement (15', 15"), qu'au moins un galet de roulement (15', 15") peut être entrainé par l'intermédiaire d'un mécanisme d'entrainement (31), que le porte-outil (17) est disposé réglable en direction radiale et qu'à au moins l'un des galets de roulement (15', 15") correspond au moins un galet de suivi de piste (22, 30) guidé dans le joint ouvert (35).

9. Dispositif selon la revendication 7 ou 8, caractérisé par le fait que sur le châssis sont prévus au moins deux galets de roulement qui peuvent être entrainés en synchronisme et dans le même sens par l'intermédiaire d'un mécanisme d'entrainement.

10. Dispositif selon l'une des revendications 7 à 9, caractérisé par le fait que les galets de roulement sont conçus sous forme de galets doubles qui sont guidés parallèlement et sont réglables radialement, de préférence automatiquement, indépendamment l'un de l'autre.

11. Dispositif selon l'une des revendications 7 à 10, caractérisé par le fait que comme outil (18) est disposé sur le porte-outil (17) au moins un outil de coupe en forme de disque.

12. Dispositif selon la revendication 11, caractérisé par le fait que plusieurs outils de coupe (18) sont disposés l'un à côté de l'autre, de préférence décalés l'un par rapport à l'autre dans la direction périphérique.

13. Dispositif selon l'une des revendications 7 à 12, caractérisé par le fait qu'au moins le galet (22) de suivi de piste présente une arête de guidage (26) en forme de disque.

14. Dispositif selon l'une des revendications 7 à 13, caractérisé par le fait que le galet de suivi de piste (22) s'appuie sur le châssis (7) par l'intermédiaire d'un ressort (24).

15. Dispositif selon l'une des revendications 7 à 14, caractérisé par le fait que l'outil (18) est disposé entre le galet de roulement (15') et le galet de suivi de piste (22), vu dans la direction périphérique.

16. Dispositif selon l'une des revendications 7 à 15, caractérisé par le fait que le châssis (7) a sensiblement la forme d'un barreau et qu'il est constitué de deux parties (8, 9) qui peuvent coulisser l'une par rapport à l'autre et se verrouiller l'une par rapport à l'autre et que le porte-outil (17) est relié à l'une des parties (9) du châssis.

17. Dispositif, en particulier selon la revendication 16, caractérisé par le fait que pour faire coulisser et pour verrouiller l'une par rapport à l'autre les deux parties (8, 9) du châssis, un dispositif d'expansion (10; 40) est disposé sur le châssis (7).

18. Dispositif selon l'une des revendications 7 à 17, caractérisé par le fait que chaque galet de roulement (15', 15") est relié au mécanisme d'entrainement (31) par l'intermédiaire d'au moins un mécanisme à vis sans fin (32).

Fig.1

Fig. 2

Fig 3

Fig. 4

Fig. 5